# EUROPÄISCHE PATENTSCHRIFT

(11) **EP 3 903 072 B1**
(45) Veröffentlichungstag und Bekanntmachung des Hinweises auf die Patenterteilung: **08.03.2023**
(21) Anmeldenummer: 20807714.9
(22) Anmeldetag: 13.11.2020
(51) Int. Cl.: G01F 1/66, G01F 15/18, G01F 15/14

(54) **BAUEINHEIT FÜR EINE FLUID-LEITUNG**
ASSEMBLY FOR A FLUID PIPE
ÉLÉMENT POUR UN TUYAU DE FLUIDE

(30) Priorität: 31.12.2019 DE 102019009033
(43) Veröffentlichungstag der Anmeldung: 03.11.2021
(73) Patentinhaber: Marquardt GmbH, 78604 Rietheim-Weilheim (DE)
(72) Erfinder: PANITZ, Mathias, 78048 Villingen-Schwenningen (DE); ZIMMER, Andreas, 78655 Dunningen (DE)
(74) Vertreter: Staeger & Sperling Partnerschaftsgesellschaft mbB
(86) Internationale Anmeldenummer: PCT/EP2020/082032
(87) Internationale Veröffentlichungsnummer: WO 2021/136614

(56) Entgegenhaltungen:
- EP-A1- 2 236 994
- EP-A1- 2 333 495
- WO-A1-2011/127934
- DE-A1-102010 030 438
- DE-A1-102014 010 375
- JP-A- S60 181 616
- US-A1- 2015 177 036
- US-A1- 2019 033 106

## Beschreibung

Die Erfindung geht aus von einer Baueinheit zur Anordnung in einer Leitung für ein Fluid nach dem Oberbegriff des Patentanspruchs 1.

Solche Baueinheiten werden für Hausgeräte, wie beispielsweise Waschmaschinen, Geschirrspülmaschinen o. dgl., eingesetzt.

Eine derartige Baueinheit umfasst eine Messstrecke für einen Durchflussmesser für das Fluid. Die Baueinheit besitzt ein Gehäuse, wobei das Gehäuse einen Einlass sowie einen Auslass für das Fluid aufweist. Weiterhin bildet das Gehäuse eine im Wesentlichen geradlinige Durchflussstrecke zwischen dem Einlass und dem Auslass für das Fluid aus. Es hat sich herausgestellt, dass in der Messstrecke ein Druckabfall auftritt, der zu Messungenauigkeiten führen kann.

Baueinheiten zur Durchflussmessung mit einer Messstrecke quer zur Durchflussstrecke sind dabei beispielsweise aus den Schriften DE 10 2014 010375 A1, US 2019/033106 A1, EP 2 333 495 A1, JP S60 181313 A und US 2015/177036 A1 bekannt. Weiter sind auch aus den Dokumenten EP 2 236 994 A1, DE 10 2010 030438 A1 und WO 211/12934 A1 verschiedene Baueinheiten zur Durchflussmessung bekannt.

Der Erfindung liegt die Aufgabe zugrunde, die Baueinheit derart weiterzuentwickeln, dass der Druckabfall, und insbesondere die Messungenauigkeiten, verringert sind.

Diese Aufgabe wird bei einer gattungsgemäßen Baueinheit durch die kennzeichnenden Merkmale des Anspruchs 1 gelöst.

Bei der erfindungsgemäßen Baueinheit gemäß Anspruch 1 ist die Messstrecke quer zu der im Wesentlichen geradlinigen Durchflussstrecke angeordnet. Aufgrund dieser Anordnung ist sichergestellt, dass der Druckverlust gering ist. Dadurch wird in vorteilhafter Weise eine präzise Durchflussmessung erreicht. Weitere Ausgestaltungen der Erfindung sind Gegenstand der Unteransprüche.

Zwecks weiterer Verringerung des Druckverlustes kann die Messstrecke mit einem flachen Winkel zu der im Wesentlichen geradlinigen Durchflussstrecke angeordnet sein. Für eine einfache und kostengünstige Durchflussmessung kann die Messstrecke zur Ultraschall-Durchflussmessung ausgebildet sein. Zweckmäßigerweise können hierfür an den Enden der Messstrecke ein Ultraschall-Sender sowie ein Ultraschall-Empfänger in der Art eines Ultraschall-Moduls angeordnet sein. Des Weiteren können Dichtelemente an den Ultraschall-Modulen zur Abdichtung der Messstrecke befindlich sein.

Zur kompakten Ausgestaltung sind Gehäuseansätze am Gehäuse zur Ausbildung der Messstrecke und zur Aufnahme der Ultraschall-Module ausgebildet. Zwecks einfacher Montage ist ein Gehäuseteil in der Art eines Deckels auf die Gehäuseansätze aufsetzbar. Der Deckel dient zur Umhausung der Leiterplatte.

Schließlich kann für die Ausbildung einer weiteren Funktionalität der Baueinheit eine Gehäusekontur im Bereich des Auslasses zur Aufnahme eines Temperaturmesselementes für das Fluid vorgesehen sein.

Für eine besonders bevorzugte Ausgestaltung der Erfindung ist nachfolgendes festzustellen.

Es soll eine Baugruppe für die Ultraschall-Durchflussmessung entwickelt werden, die im Wesentlichen folgende Nachteile vermeidet:
- Druckabfall durch im Strömungskanal befindliche Teile, Konturen und/oder Querschnittsänderungen.
- Umlenkung der Strömung im Strömungskanal hin zur Messstrecke der Ultraschallwandler.
- Verwendung von Metallteilen zur mechanischen Stabilität bei großen Drücken und Temperaturen.
- Nicht kunststoffgerechte Einzelteile.
- Verwendung von zusätzlichen Verbindungselementen.
- Einschluss von in der Strömung befindlichen Luftblasen.
- Messen der Fluidtemperatur durch ein direkt im Medium befindliches Temperaturelement.

Die Baugruppe bildet eine geschlossene Rohrleitung, welche vom Medium durchströmt wird. Um einen geringen Druckverlust sicherzustellen, wird das Medium in einem geradlinigen Rohrverlauf des Gehäuses von dem optional kundenspezifisch ausgelegten Einlass hin zum optional kundenspezifisch ausgelegten Auslass geführt. An den geradlinigen Rohrverlauf, durch den das Medium hindurchfließt, ist in einem flachen Winkel eine Kontur, welche die Messtrecke bildet, im gleichen Teil, nämlich am Gehäuse, umgesetzt. Der Winkel ist dabei so ausgelegt, dass dieser eine gute Evakuierung der im Medium befindlichen Luftblasen, eine zuverlässige Ultraschallmesstrecke und gleichzeitig eine kunststoffgerechte Herstellung ermöglicht. Im Bereich des Auslasskanals befindet sich optional eine kuppelähnliche Kontur zur Ermöglichung der indirekten Temperaturmessung des Fluids. Im Bereich der Messtrecke befinden sich Ausbuchtungen zur Positionierung der notwendigen Dichtelemente und Ultraschallmodule. Gleichzeitig sind Kabelführungen, die Leiterplattenfixierung sowie die Steckerfixierung im gleichen Teil umgesetzt. Durch ein weiteres kunststoffgerechtes Einzelteil, nämlich den Deckel, werden die Dichtelemente komprimiert, die Module fixiert, die Kodierung für den spezifizierten Stecker und die Umhausung von Leiterplatte und Kabel kompakt umgesetzt.

Durch dieses Konzept kann insbesondere der durch die Umlenkung und/oder durch die Querschnittsänderung verursachte Druckverlust auf ein Minimum reduziert werden. Gleichzeitig wird durch die Integration mehrerer Funktionen in zwei kunststoffgerecht ausgelegte Einzelteile, nämlich das Gehäuse und der Deckel, die Anzahl der Einzelteile, sowie die Abmessungen und Kosten der Baugruppe auf ein Minimum reduziert und die zuverlässige Durchflussmessung gewährleistet. Durch die indirekte Temperaturmessung im Auslassbereich wird die Anzahl der in Mediumkontakt befindlichen Einzelteile reduziert und eine optionale Trinkwasserzulassung vereinfacht.

Die eigentliche Ultraschallmessung kann durch an sich bekannte Messverfahren erfolgen. Es bieten sich nach dem Mitführungseffekt messende Verfahren an, wie z.B. die Phasendifferenzmessung, Frequenzdifferenzmessung, Impulsverfahren oder Ablenkverfahren.

Geschaffen ist mittels der Erfindung eine Sensorbaugruppe zur kompakten, druckverlustarmen Ultraschallmessung innerhalb von geschlossenen Rohrleitungen.

Die mit der Erfindung erzielten Vorteile bestehen insbesondere in Folgendem:
- Zuverlässige, genaue Durchflussmessung bei kleiner Baugruppengröße.
- Minimale Anzahl an Einzelteilen.
- Minimaler Druckabfall.
- Große Messtrecke und leichte Evakuierung von im Medium befindlicher Luft aus der Baugruppe.
- Kunststoffgerechte Konstruktion ohne zusätzliche Verbindungselemente geeignet für hohe Drücke und/oder Temperaturen.
- Schnelle Bestimmung von Durchfluss und/oder Fluid-Temperatur.
- Langlebige, effiziente Lösung ohne zusätzliche Einzelteile in Kundenapplikation.
- Verschleißfreie, da berührungslose Durchflussmessung.
- Signalauswertung intern und/oder extern möglich.
- Low-Cost Lösung im Vergleich zu bisherigen Baueinheiten.

Ein Ausführungsbeispiel der Erfindung mit verschiedenen Weiterbildungen und Ausgestaltungen ist in den Zeichnungen dargestellt und wird im Folgenden näher beschrieben. Es zeigen
Fig. 1 eine Baueinheit, umfassend ein Gehäuse und einen Deckel, zur Anordnung in einer Leitung für ein Fluid in perspektivischer Ansicht,
Fig. 2 die Baueinheit aus Fig. 1 mit abgenommenen Deckel,
Fig. 3 einen Längsschnitt durch das Gehäuse der Baueinheit aus Fig. 1 und
Fig. 4 Detailansichten der Baueinheit aus Fig. 1.

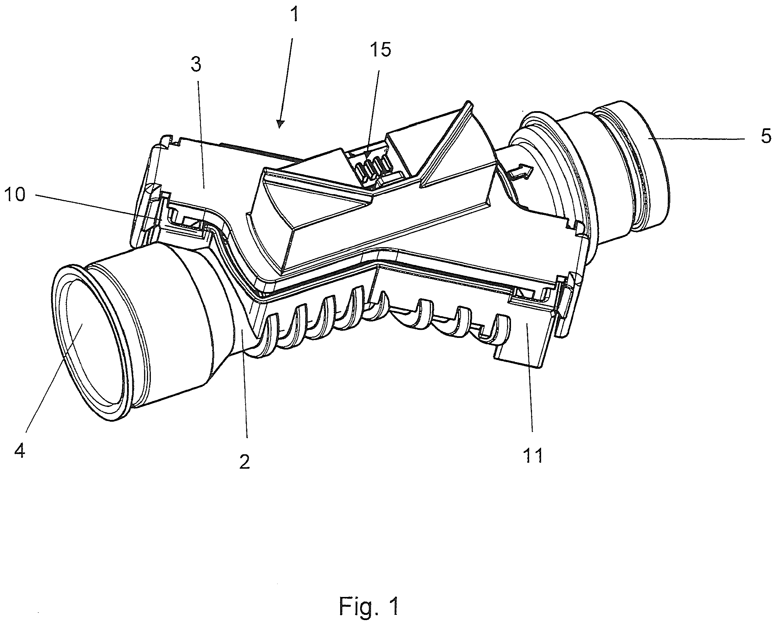

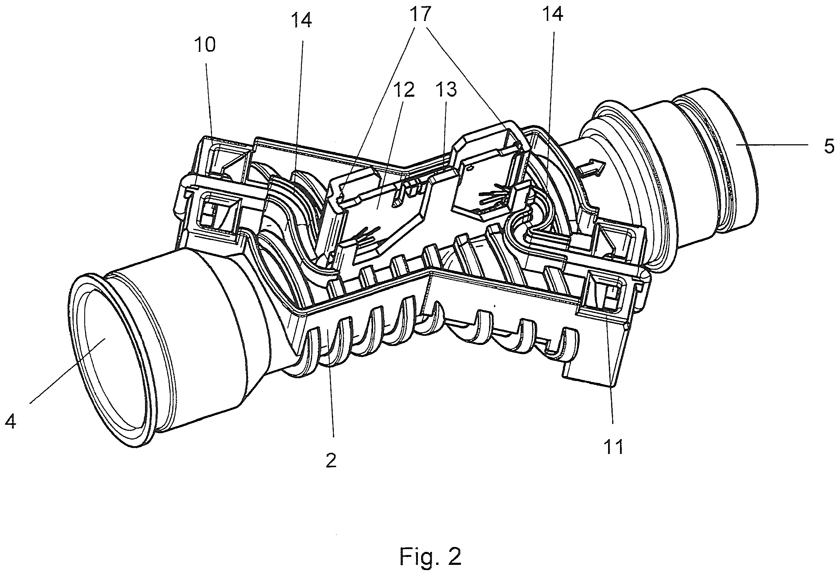

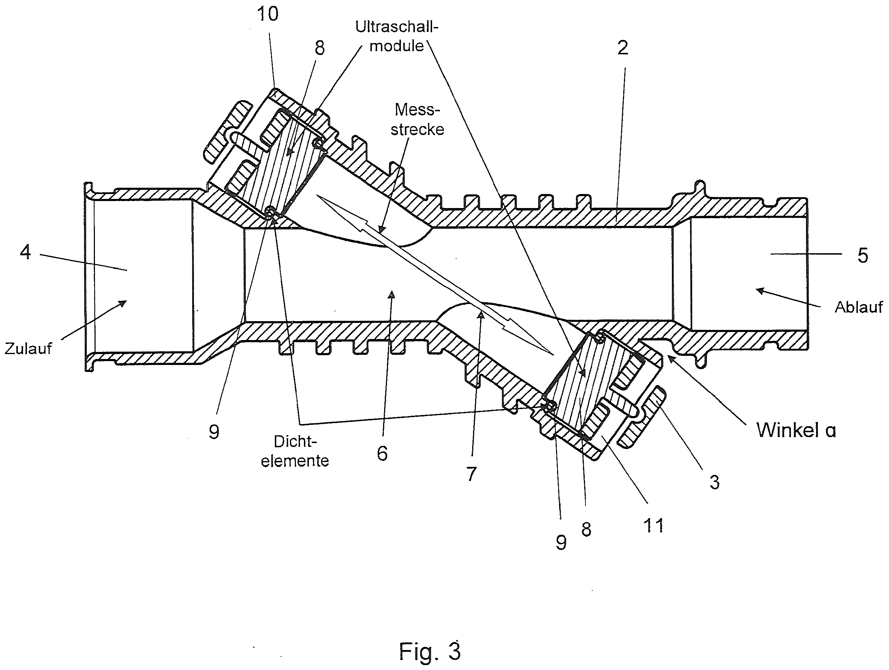

In Fig. 1 ist eine Baueinheit 1 zur Anordnung in einer Leitung für ein Fluid zu sehen. Die Baueinheit 1 umfasst ein Gehäuse 2 und einen Deckel 3. Das Gehäuse 2 weist einen Einlass 4 sowie einen Auslass 5 für das Fluid auf. Wie weiter in Fig. 3 zu sehen ist, bildet das Gehäuse 2 eine im Wesentlichen geradlinige Durchflussstrecke 6 zwischen dem Einlass 4 und dem Auslass 5 für das Fluid aus. Des Weiteren ist im Gehäuse 2 eine Messstrecke 7 für einen Durchflussmesser für das Fluid angeordnet. Gemäß Fig. 2 ist die Messstrecke 7 quer zu der im Wesentlichen geradlinigen Durchflussstrecke 6 angeordnet, und zwar ist die Messstrecke 7 mit einem flachen Winkel α zu der im Wesentlichen geradlinigen Durchflussstrecke 6 angeordnet.

Die Messstrecke 7 ist zur Ultraschall-Durchflussmessung ausgebildet. Hierfür sind an den Enden der Messstrecke 7 ein Ultraschall-Sender sowie ein Ultraschall-Empfänger in der Art eines Ultraschall-Moduls 8 angeordnet. Des Weiteren sind Dichtelemente 9 an den Ultraschall-Modulen 8 zur Abdichtung der Messstrecke 7 befindlich.

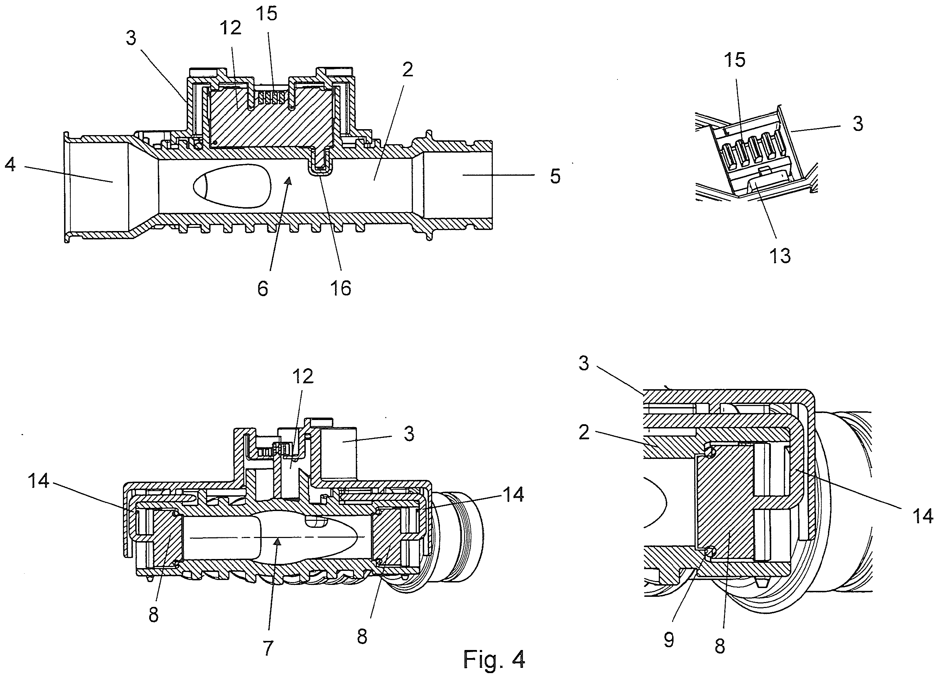

Zur Ausbildung der Messstrecke 7 und/oder zur Aufnahme der Ultraschall-Module 8 sind Gehäuseansätze 10, 11 am Gehäuse 2 ausgebildet. Die Gehäuseansätze 10, 11 sind weiterhin zur Aufnahme einer Leiterplattenfixierung 13 für eine Leiterplatte 12, die als Träger für die Auswerteelektronik für die Messung dient, sowie einer Kabelführung 14 von der Leiterplatte 12 zu den Ultraschall-Modulen 8 ausgebildet, wie anhand von Fig. 2 zu erkennen ist. Gemäß Fig. 1 ist noch eine Steckerfixierung 15 für die Zuleitungen zur Baueinheit 1 vorgesehen. Die Detaillierungen der Leiterplattenfixierung 13, der Kabelführung 14, der Steckerfixierung 15 o. dgl. sind schließlich näher in Fig. 4 gezeigt. Das Gehäuseteil in der Art eines Deckels 3 ist gemäß Fig. 1 auf die Gehäuseansätze 10, 11 aufsetzbar. Dabei dient der Deckel 3 zur Komprimierung der Dichtelemente 9, zur Fixierung der Ultraschall-Module 8, zur Umhausung der Leiterplatte 12 sowie der Kabel 14, zur Kodierung für den Stecker o. dgl., wie man näher anhand der Fig. 4 sieht. Schließlich ist noch eine in Fig. 4 sichtbare Gehäusekontur 16 im Bereich des Auslasses 5 zur Aufnahme eines Temperaturmesselementes für das Fluid vorgesehen.

Die Ausbildung des Gehäuse 2 bietet folgende Eigenschaften:
- Minimalster Druckabfall durch den geraden Durchflusskanal 6 und im Winkel angebrachte Messstrecke 7.
- Einfache Evakuierung von Luftblasen durch den flachen Winkel α.
- Integrierte Tasche 16 zur Fluid-Temperaturmessung im Auslass 5.
- Kunststoffgerecht herstellbar.
- Verstärkungsrippen zur Verwendung in hohen Druckbereichen.
- Integrierter Schacht und Rippen zur Leiterplattenfixierung 13.
- Integrierter Rasthaken zur kundengerechten Steckerfixierung 15.
- Integrierte Kabelführung 14 für die Ultraschallmodule 8.

Die Ausbildung des Deckels 3 bietet folgende Eigenschaften:
- Schieber zur Positionierung der Ultraschallmodule 8.
- Gegenkontur für den Kundenstecker im Schacht inklusive Kodierung
- Umhausung der Leiterplatte 12 und der Kabel 14.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann die erfindungsgemäße Baueinheit nicht nur bei Waschmaschinen oder Geschirrspülmaschinen, sondern auch bei sonstigen Geräten der Weißen Ware sowie in der Heizungstechnik o. dgl., in denen eine Durchflussmessung vorgenommen werden soll, Verwendung finden.

## Patentansprüche

1. Baueinheit zur Anordnung in einer Leitung für ein Fluid,
mit einer Messstrecke (7) für einen Durchflussmesser für das Fluid, und mit einem Gehäuse (2),
wobei das Gehäuse (2) einen Einlass (4) sowie einen Auslass (5) für das Fluid aufweist, und
wobei das Gehäuse (2) eine im Wesentlichen geradlinige Durchflussstrecke (6) zwischen dem Einlass (4) und dem Auslass (5) für das Fluid ausbildet,
wobei die Messstrecke (7) quer zu der im Wesentlichen geradlinigen Durchflussstrecke (6) angeordnet ist,
wobei Gehäuseansätze (10, 11) am Gehäuse (2) zur Ausbildung der Messstrecke (7) und zur Aufnahme der Ultraschall-Module (8) ausgebildet sind,
wobei in jedem Gehäuseansatz (10, 11) jeweils ein Ultraschall-Modul (8) angeordnet ist und die Gehäuseansätze (10, 11) auf gegenüberliegenden Seiten des Gehäuses (2) angeordnet sind,
**dadurch gekennzeichnet, dass** in einem zwischen den Gehäuseansätzen (10, 11) liegenden Abschnitt des Gehäuses (2) eine Leiterplattenfixierung (13) zur Aufnahme einer Leiterplatte (12) ausgebildet ist, von welcher eine Kabelführung (14) zu den Ultraschall-Modulen (8) führt und
wobei ein Gehäuseteil in der Art eines Deckels (3) ausgebildet ist, auf die Gehäuseansätze (10, 11), den die Gehäuseansätze (10, 11) verbindenden Abschnitt sowie die Kabelführungen (14) zur Umhausung der Leiterplatte (12) aufsetzbar zu sein.

2. Baueinheit nach Anspruch 1, **dadurch gekennzeichnet, dass** die Messstrecke (7) mit einem flachen Winkel (α) zu der im Wesentlichen geradlinigen Durchflussstrecke (6) angeordnet ist.

3. Baueinheit nach Anspruch 1 oder 2, **dadurch gekennzeichnet, dass** die Messstrecke (7) zur Ultraschall-Durchflussmessung ausgebildet ist, dass vorzugsweise an den Enden der Messstrecke (7) ein Ultraschall-Sender sowie ein Ultraschall-Empfänger in der Art eines Ultraschall-Moduls (8) angeordnet sind, und dass weiter vorzugsweise Dichtelemente (9) an den Ultraschall-Modulen (8) zur Abdichtung der Messstrecke (7) befindlich sind.

4. Baueinheit nach einem der Ansprüche 1 bis 3, **dadurch gekennzeichnet, dass** eine Gehäusekontur (16) im Bereich des Auslasses (5) zur Aufnahme eines Temperaturmesselementes für das Fluid vorgesehen ist.

## Claims

1. An assembly for arrangement in a pipe for a fluid,
with a measuring section (7) for a flow meter for the fluid, and with a housing (2),
wherein the housing (2) comprises an inlet (4) and an outlet (5) for the fluid, and
wherein the housing (2) forms a substantially straight flow section (6) between the inlet (4) and the outlet (5) for the fluid,
wherein the measuring section (7) is arranged transversely with respect to the substantially straight flow section (6),
wherein housing projections (10, 11) on the housing (2) are designed to form the measuring section (7) and to receive the ultrasound module (8),
wherein, in each housing projection (10, 11), a respective ultrasound module (8) is arranged and the housing projections (10, 11) are arranged on opposite sides of the housing (2),
**characterized in that**, in a section of the housing (2) situated between the housing projections (10, 11), a circuit board attachment (13) for receiving the circuit board (12) is formed, from which a cable guide (14) leads to the ultrasound modules (8), and
wherein a housing portion in the form of a cover (3) is designed so that it can be placed on the housing projections (10, 11), the section connecting the housing projections (10, 11), and the cable guides (14) in order to enclose the circuit board (12).

2. The assembly according to claim 1, **characterized in that** the measuring section (7) is arranged at a flat angle (α) with respect to the substantially straight flow section (6).

3. The assembly according to claim 1 or 2, **characterized in that** the measuring section (7) is designed for ultrasound flow measurement, **in that**, preferably at the ends of the measuring section (7), an ultrasound transmitter and an ultrasound receiver in the form of an ultrasound module (8) are arranged, and **in that** furthermore sealing elements (9) are preferably located on the ultrasound modules (8) in order to seal the measuring section (7).

4. The assembly according to any one of claims 1 to 3, **characterized in that** a housing contour (16) is provided in the region of the outlet (5) for receiving a temperature measuring element for the fluid.

## Revendications

1. Unité modulaire destinée à être disposée dans un conduit pour un fluide,
comprenant une section de mesure (7) pour un débitmètre pour le fluide, et un boîtier (2),
dans laquelle le boîtier (2) présente une entrée (4) ainsi qu'une sortie (5) pour le fluide, et
dans laquelle le boîtier (2) réalise un trajet d'écoulement (6) substantiellement rectiligne entre l'entrée (4) et la sortie (5) pour le fluide,
dans laquelle la section de mesure (7) est disposée transversalement au trajet d'écoulement (6) substantiellement rectiligne,
dans laquelle des épaulements de boîtier (10, 11) sont réalisés sur le boîtier (2) afin de réaliser la section de mesure (7) et de recevoir les modules à ultrasons (8),
dans laquelle respectivement un module à ultrasons (8) est disposé dans chaque prolongement de boîtier (10, 11), et les épaulements de boîtier (10, 11) sont disposés sur des côtés opposés du boîtier (2),
**caractérisée en ce que** dans une section du boîtier (2), située entre les épaulements de boîtier (10, 11), un dispositif de fixation de carte de circuits imprimés (13) est réalisé pour recevoir une carte de circuits imprimés (12), à partir duquel un chemin de câble (14) mène aux modules à ultrasons (8), et
dans laquelle une partie de boîtier est réalisée à la manière d'un couvercle (3) afin de pouvoir être placée sur les épaulements de boîtier (10, 11), la section reliant les épaulements de boîtier (10, 11) ainsi que les chemins de câbles (14), pour encapsuler la carte de circuits imprimés (12).

2. Unité modulaire selon la revendication 1, **caractérisée en ce que** la section de mesure (7) est disposée à un angle plat (α) par rapport au trajet d'écoulement (6) substantiellement rectiligne.

3. Unité modulaire selon la revendication 1 ou 2, **caractérisée en ce que** la section de mesure (7) est réalisée pour la mesure de débit à ultrasons, **en ce que** de préférence un émetteur d'ultrasons ainsi qu'un récepteur d'ultrasons sont disposés aux extrémités de la section de mesure (7) à la manière d'un module à ultrasons (8), et **en ce qu'**en outre de préférence des éléments d'étanchéité (9) se trouvent sur les modules à ultrasons (8) pour rendre étanche la section de mesure (7).

4. Unité modulaire selon l'une quelconque des revendications 1 à 3, **caractérisée en ce qu'**un contour de boîtier (16) est prévu au niveau de la sortie (5) pour recevoir un élément de mesure de température pour le fluide.
